# EUROPEAN PATENT APPLICATION

(11) **EP 4 610 756 A1**
(43) Date of publication of application: **03.09.2025**
(21) Application number: 24201163.3
(22) Date of filing: 18.09.2024
(51) Int. Cl.: G05B 19/418

(54) **METHOD FOR ADAPTING EXISTING DATA MODELS, COMPUTER PROGRAM PRODUCT, AND APPARATUS**

(71) Applicant: Siemens Aktiengesellschaft, 80333 München (DE)
(72) Inventor: Biehler, Georg, 90453 Nürnberg (DE); Blumenstock, Werner, 91085 Weisendorf (DE); Kiebler, Clemens, 09113 Chemnitz (DE); Thuluva, Aparna Saisree, 85764 Oberschleißheim (DE)
(74) Representative: Siemens Patent Attorneys

(57) **Abstract**

The described solution empowers OT engineers, system integrators etc to enhance and adapt existing data models e. g. in the Brownfield of an industrial plant, for newly introduced data, by reducing the skill gap to develop industrial information models, which accelerates IT-OT integration. Moreover, it also increases the adoption of relevant standards.

Further on, the solution also empowers the IT engineers on the IT layer to efficiently use the OT data uniformly and provide valuable data insights over it.

## Description

Smart Factory refers to a production environment in which manufacturing plants and logistics systems largely self-organize without human intervention in order to produce the desired products.

The networking of embedded production systems and dynamic business and engineering processes enables the profitable production of products even with individual customer requirements up to batch size 1. The technical basis is cyber-physical systems, which refers to both physical production objects and their virtual image in a centralized system (Digital Twin). Another part of this future scenario is the communication between the product (e.g. workpiece) and the production plant: The product brings its own production information in machine-readable form, e.g. on an RFID chip. This data is used to control the path of the product through the production line and the individual production steps. Other transmission technologies, such as WLAN, Bluetooth, color coding or QR codes, are also currently being experimented with.

Data is the basis for Smart Factory. There exist multiple machines and devices deployed on the factory shopfloor that produce operational (OT) data. These are usually machines that come from multiple vendors, which produce their OT data potentially in diverse data formats, units, data scales, semantics etc. To make OT data available and universally usable, data collection platforms are getting more and more common in the shopfloor. They collect the OT data of the machines and devices, and make them available to applications managing, monitoring and optimizing the production.

Today a major problem is that the data from the machines and devices in the shopfloor is typically not normalized and include no semantic information. This makes it very laborious to identify the data required in the big data collection.

For example, in many cases, the data can be scaled very differently, i.e. some variables can have much larger or smaller values than others. This can be problematic for certain statistical methods or machine learning algorithms, as they are sensitive to the scaling of the data. Normalization can solve this problem by adjusting the values of the variables so that they lie within a certain interval, often between 0 and 1, or around the mean with a certain standard deviation. Normalization could also be: Using the same engineering units for different variables, or having the same understanding of operating status.

In manufacturing, a Common Information Model is a model based on industrial standards, vendor specific or customer specific information (e. g., FFT, VASS, Integra) enabling data understanding between different production lines.
1. The first level of understanding is horizontal: between devices and systems (assets).
2. The second level is vertical: across the different layers of industrial automated production plants. This can include field level, control level, supervisory level, planning level, enterprise level, and cloud.

For using the data in the field, it is crucial to normalize the diverse data and provide a harmonized and uniform interface, e. g., an Asset Administration Shell (AAS) interface, OPC UA interface etc., over it so that the OT data can be used consistently and efficiently, and useful data insights can be provided. Therefore, normalization / semantification of OT data is important for its usage with industrial information models (AAS, OPC UA standard etc.).

Data analytic applications can only be developed in an interoperable and general way (meaning usable for multiple devices or machines), and in addition easily and effectively if they can expect normalized and semantically enriched data. Moreover, it improves data quality and enables interoperability across systems.

Semantification of data means to add meaningful information (e. g., data type of the data, engineering units, timestamp, machine from which data is generated, location etc.) to the data in order to convert the data into knowledge and generate useful insights from it. It also means storing more experience and backgroundknowledge and make that extra information accessible for LLM.

Today, e. g. adding data of a machine or a device to the data collection platform requires very laborious manual work. Usually, a user must identify the datapoints to add (e. g., by reading manuals) and then manually add semantics and normalize the datapoints by also identifying the data types and bring the information together in the correct form.

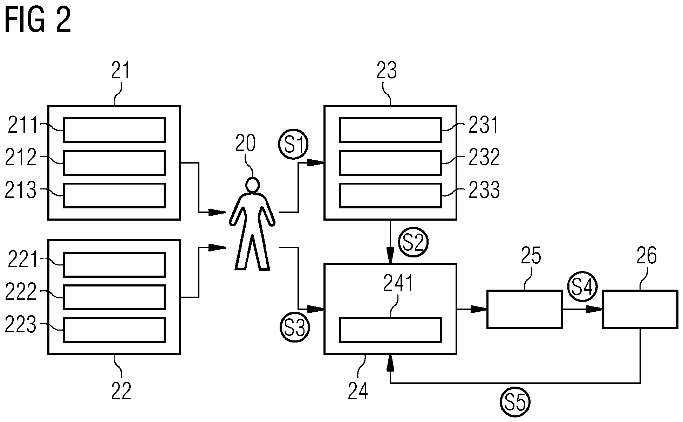

Figure 2 shows a State of the art approach for normalization and semantification of so called brownfield data, where newly developed software must be integrated into an existing software and architecture concept. In contrast to completely new development (also known as 'greenfield development'), further development must comply with structural framework conditions.

A user 20, e. g. a OT engineer or a System Integrator collects all available information 22, like electrical plans, 223, engineering project documentation 222 or machine builder documentation 221. In addition there are Multi-modal data and information sources 21, like sensor measurement data 211, event streams 212 or data computed by automation programs 213.

In a first step S1 the user reads and understands Industrial standards 23 (AAS 231, OPC UA 232, etc. 233).

In a second step S2, the type information models are imported to expert tools 24, for information modelling.

In a third step S3, the user has to understand the collected data and machine information 21, 22 and apply the type information and information models to a machine 241. Als a result there will be created an information model for the intended machine 25.

In a fourth step S4, the created model will be validated, and a validation report 26 can be generated.

There are several challenges in normalization and semantification of OT data for the system integrator or OT engineer. Both, the system integrator and the OT engineer, need a fair amount of knowledge about the target information model (e. g., standardized information model like an OPC UA Companion Spec, vendor-specific information model, or customer-specific information model) to be used, and they should know how to apply the target information model for their machines or devices. They should have knowledge about using information modelling tools. But the system integrators or OT engineers are not experts in information modelling. Therefore, there is a very clear skill gap that needs to be addressed as the existing tools available for them are expert tools and there are no clear or intuitive guidelines for doing the normalization and semantification process.

It is therefore the task of the invention to provide a solution to the above-mentioned problem. a method is to be specified which supports the enriching of an existing automation systems with new information models in an automated form.

The described problem is solved by a method according to the features of patent claim 1.

The problem is further solved by a software program product according to the features of patent claim 8 and by an apparatus according to the features of patent claim 9.

Further examples of embodiments are described in the sub-claims.

The claimed method for adapting data-models and introducing new data of an existing facility containing data-producing elements, in particular actuators, sensors and automation program data, collecting data on the status of the actuators or the facility, into a control system wherein the control system comprises at least one building block,
having the following steps:
a) receiving data from the data-producing elements
b) normalizing and enriching the semantics of the received data, (semantificating)
c) building a pre-structured information-model of the facility by using the normalized data,
d) creating a target information model (13) by using a target information model template,
e) aligning the pre-structured information model with the target model, and
f) introducing the target model in the control system.

A control system is for example a PLC controller in the case of an industrial facility. The target model and the conversion can be excuted somewhere else, e.g. at the data collection platform.

We need normalized and semantic data for enabling an application ecosystem to provide applications for e.g., analyzing and optimizing the production. We need better tools to simplify the generation of such data annotation. Since as of now such tools do not exist, the semantification and normalization process is avoided by the machine builder. Therefore, every new machine on the shopfloor requires an adaptation of all apps or must be painfully adapted to data collection platforms adapted to an harmonized represention in the data collection platform. Normalization and harmonization is often done in the data collection platform, e. g. collecting the data as it is from the different sources and then converts / adopts to an harmonized representation. That's in the moment a major pain point for the stakeholders.

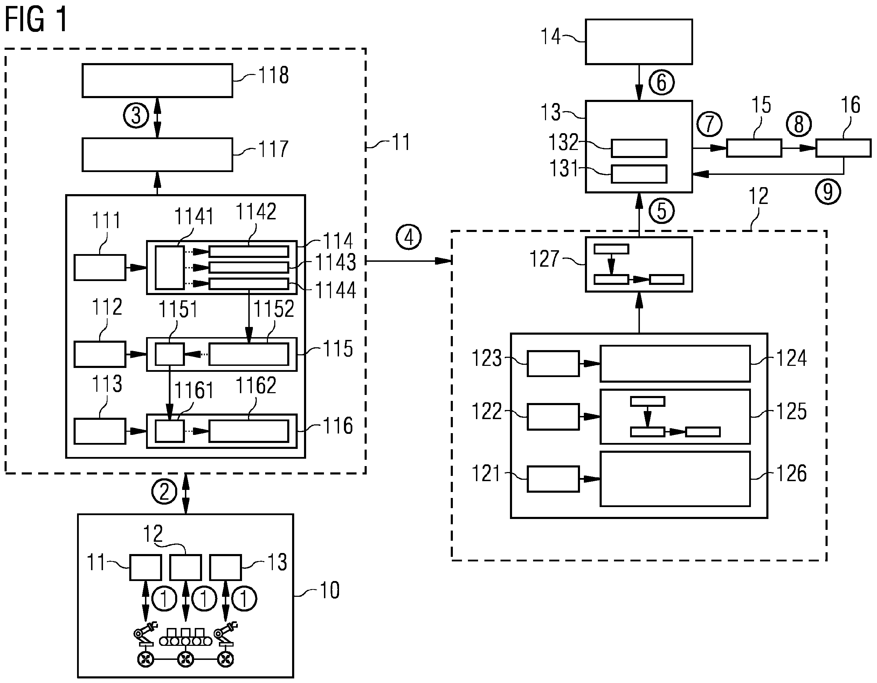

Figure 1 shows an end-to-end approach for data normalization and semantification of existing automation projects according to the claimed invention.

OT machines in the real environment 10 include many sensors, actuators which produce sensor measurements, event streams etc. In addition, they provide data computed by the automation program such as machine state, number of produced items, error states etc.

As shown in the Figure 1, the sample production cell consists of two robots and one conveyor belt. Sensors may for example measure the speed of the conveyor belt or the temperature of one of the motors. Actuators are for example motors, which are used to bend the robot arm or to move the conveyor belt. Data provided by the automation program of the cell controller are for example the current state of the cell, the number of produced goods, the utilization of the cell, or the number of packets on the conveyor belt. In the figure, each machine in a first step is sending data to a Server 11, 12, 13 (e.g. a PLC, VPLC,...) for further processing.

All data sources need to be normalized and semantified. Additional information and context is needed for normalization and semantification, such as information on the used engineering units, operational range, location etc. This additional information and context can be acquired from multiple sources for example:

### Engineering project:

Engineering project that is provided by the engineering tools where the machines are engineered (e.g., TIA (Totally Integrated Automation) Portal project) is major source of information that provides contextual information about a machine. An engineering project consists of an **automation program 111** including information about data structures and automation functions offered by a machine. It gives information about their data, data type, function/program type etc.

DataBlock 1141 consists of Encapsulations Function Block 1142, Datatype 1143 and PLC tag 1144.

An engineering project also provides information about the **hardware configuration 112** of a machine which provide information about the used hardware types and terminal assignment. The hardware configuration provides the link between the automation program and the Electrical construction diagram (e.g., which terminal is connected to which sensor, and the mapping of the terminal into the automation program using an input address). In the I/O module 1151, with PLC tag, 1144, 1152. This is depicted in Figure 1, step 2 where the additional contextual and semantic information is added to sensor measurements using the PLC tag information from automation programs and linking it to the corresponding I/O module in the hardware configuration 112 and furthering linking the I/O module information from hardware configuration with I/O clamp 116 information in **Electrical construction diagram 113,** e.g. sensor type, unit of measurement, from eCI@ss, EDD etc. Thus, by extracting appropriate information from various sources and linking them meaningfully helps us to extract the required contextual and semantic information of an existing machine.

Therefore, on top of the sensor measurements and event stream data, the engineering project of a machine provides contextual information about the datatype, function type of the sensor measurements and event streams. The automation program provides information about how the sensor measurements and event streams are grouped into data structures and functions in a machine. Ultimately, this grouping helps to build the structure of the information model for the machine.

However, only this contextual information is not sufficient. Important information such as engineering units, timestamp, range etc. may not be available in the engineering project of a machine. As mentioned in the above paragraphs, the semantic information can be obtained from sources such as Electrical construction diagram.

### Electrical construction diagram of a machine 113:

Actuators or sensors may be attached to a machine or device using digital or analogous interface ports according to IEC 61132-2. In this case the clamp of an I/O module, where the actuator or sensor is attached to, transmits or receives the actual value of an analogous actuator or sensor as current or voltage. Typically engineering projects will not contain the type of the sensor or actuator but concentrate on the I/O module itself. To enrich the clamp with semantic information, Electrical construction diagrams may be used.

The Electrical construction diagram 113 contains information about the types of sensors and actuators connected to a machine. From the Electrical construction diagram the semantic information about sensors and actuators can be acquired, which provides contextual information such as engineering units, range, timestamp, manufacturer etc. about the sensors and actuators. That is, the Electrical construction diagram usually has links to the eCI@ss (https://eclass.eu) definitions of the sensors and actuators which provides the required semantic information. eCI@ss is a well-defined semantic model that provides definitions for sensors, actuators etc. Thus, from Electrical construction diagram we can extract the contextual (e.g., information about geographical, topological and hierarchical location of sensors, actuators and components of a machine) and semantic information about sensor measurements and event streams.

Machine builders will most likely use an electrical construction diagram tool (e.g., EPlan) to draw the electrical construction. Consider a temperature sensor attached to an input clamp using voltage encoding and measuring the temperature of a motor in our sample as shown in Figure 1. The diagram will indicate the clamp, where the temperature sensor is connected, the type of the sensor (e.g ., some sensor following the PT100 profile), and the location, where the sensor is attached (e. g., measuring the temperature of Motor1). The configuration of the sensor will indicate that the engineering unit is for example °C, and its operational range is 80 °C to 120 °C. This collected information can be used to normalize the sensor value (see Figure 1 step 3.).

So the Information first might be in an example:

| | |
|---|---|
| DataBlock: | |
| PLCtag | |
| DB semantic type (Sensor type) | temperature |
| Data type | float |
| Data | 1,7 |
| Unit of measurement | V |
| Unit of measurement | double |
| Function block | motor |

And after normalization (here a conversion from voltage to temperature value)

The information looks like

| | |
|---|---|
| DataBlock: | |
| PLCtag | |
| DB semantic type (Sensor type) | temperature |
| Data type | float |
| Data | 20,5 |
| Unit of measurement | °C, |
| Unit of measurement | double |
| Function block | motor |

Using the above-mentioned sources of information, we could extract the contextual and semantical information about the individual sensors and actuators of a machine, and we could also normalize the data provided by them.

### Normalization of OT data:

Normalize the diverse data coming from several sensor and actuators includes to put it in a uniform way. As mentioned above, well-defined semantic models and standards such as eCI@ss, EDD can be used for this purpose. If a sensor measurement or event stream does not comply to the standard (e.g., engineering units) are different, then it can be easily normalized by doing a conversion of measurement for the desired engineering units. In most cases it would be possible to automatically generate the code for normalization.

As already said, analogous sensor or actuators are often attached according to IEC 61131-2 (e.g., a temperature sensor) and have their process value encoded to a voltage or current. This means that the measurement range of the actuator or sensor (upper and lower limit, e.g., -50 °C to 200 °C) is converted using for example a linear conversion to the selected voltage or current range (upper and lower limit, e.g., 4 mA to 20 mA).

In our sample this would apply for example for the sensor measuring the temperature of the motor, but also for a pressure sensor measuring the pressure of a hydraulic cylinder.

The fourth step after normalization is building the information model, for this purpose, we first need to build a pre-structured model (e.g., group the data structures and functions) and then align it with a target information model to enrich its semantics. For this purpose, along with automation programs and normalized data, we need additional information sources as mentioned below.

### Naming conventions 122:

It is expected that vendors follow good naming conventions (e.g., specified in the guideline of the machine builder) and provide good documentation to their data structures and functions of machines. Naming conventions allow for example to identify sub-components of the machine and their types, may offer information about geographical, topological and hierarchical location, and can help to auto-locate the information into an information model. This also provides required contextual information to understand the grouping of data structures, functions, their input/output variables of functions etc. which is crucial in developing an information model for a machine.

### Vendor Specific (Standardization) Frameworks 123, 124 (optional):

Vendor specific frameworks (such as SiCAR) provide building blocks and guidelines which help to build automation programs for specific use cases much quicker and in a standardized way. They also provide meaningful information by comments, textual description and documentation. They provide naming conventions and structure to the data, that can be used to derive structure to build the information model. In our example SiCar was used to automate the cell.

Therefore, as shown in Figure 1, step 4, using the information from automation programs, naming conventions and standardization frameworks a pre-structured information model could be build, following the structure of the automation program. To build it, the contextual information from these sources should be extracted, associated to the data correctly, and grouped together according to the implementation of the automation program. At last, it can then be further enriched with semantics by aligning it with target information models.

### Target Information Model Types and Templates:

Target information model types are well-defined by industrial standards (e.g., OPC UA Companion Standard, AAS Submodel etc.), by a customer, by a vendor (e.g., VASS standard, Integra etc.), or by automation frameworks (e.g., SICAR). They describe how to correctly structure an information model for a machine and the semantics of each of the components of a machine. Templates are sample instance models using such well-defined types. Therefore, the pre-structured information model 127 generated in the step 4 of our approach as depicted in Figure 1 should be aligned with target information model types.

### Step 5: Aligning pre-structured Information model with a target model:

However, this is a very tedious and error-prone process, generative AI technologies such as LLMs 13 are very helpful for this purpose. By using LLMs a step-by-step intuitive and interactive solution can be provided to an engineer to align the pre-structured information model with the target. This includes, as a step 6, the match with a pre-structured information model, by selecting of a fitting target information model out of e.g. AAS sub-model template, OPC UA companion spec, vendor specific information model, customer information model, 14, and the adaptation of target information model templates to the specific usage in the project (e. g., using four axes in the project based on a template having three axes).

The LLM, among other things, summarizes the existing standards suitable to the model of the machine, 132 and generates an information model tailored for the given situation, 131.

The described solution empowers OT engineers, system integrators etc., by reducing the skill gap to develop industrial information models, which accelerates IT-OT integration. Moreover, it also increases the adoption of relevant standards.

Further on, our solution also empowers the IT engineers on the IT layer to efficiently use the OT data uniformly and provide valuable data insights over it.

In addition, in step 6, the common patterns are used to identify semantic building blocks, which are small pieces of an information model, and which can be re-used in multiple information models. Such building blocks are defined in industrial standards (e. g., OPC UA Companion Standard, AAS Submodel etc.), by a customer, by a vendor (e. g., VASS standard, FTT etc.), or by automation frameworks (e.g., SICAR). By that OT Data can be presented in a harmonized way and can be used consistently and efficiently. E.g. OPC UA for Machinery defines so called "basic building blocks" for Nameplate, MachineryltemState, MachineryOperationMode ...

By identifying semantic building blocks and associating the OT Data to such blocks, the system can automatically create code for DataOps providing the conversion from unharmonized OT data values to a harmonized representation.

The automatic enrichment of OT data with semantics as described above reduces efforts for onboarding machines or devices into a data collection platform. In addition, data required for applications which manage, monitor or optimize the production is provided in a harmonized way, simplified and is easily identifiable.

As optional steps 7, 8 and 9, the created information model 15 can be validated for the intended use and as an output, there is a validation report generated, 16, which then can also be used to correct the model in a feedback loop.

## Claims

1. A method for introducing new data of an existing facility (10) containing data-producing elements, in particular actuators, sensors or automation program data, collecting data on the status of the actuators or the facility, into a control system (11) wherein the control system (11) comprises at least one building block,
with the following steps:
a) receiving data from the data-producing elements (2)
b) normalizing and enriching the semantics of the received data,
c) building a pre-structured information-model of the facility by using the normalized data, (4)
d) creating a target information model (13) by using a target information model template (14),
e) aligning the pre-structured information model with the target model (13), and
f) introducing the target model in the control system (11).

2. A method according to the features of claim 1, wherein
the facility is an industrial production plant.

3. A method according to the features of any of the preceding claims, wherein
the aligning of step e) is done by a Generative Al.

4. A method according to the features of any of the preceding claims, wherein
after step e) the generated target model (15) is validated for an intended use in the facility, and as an output, a validation report is generated (16), which then is used to correct the generated target model, before introducing the generated target model to the control system.

5. A method according to the features of any of the preceding claims, wherein
In step b) normalizing and semantificating the received data is done by using well-defined semantic models or standards in the field of use.

6. A method according to the features of any of the preceding claims, wherein
as an intermediate step, a pre-structured model is created, following the structure of the control program, and wherein the data is grouped together accordingly.

7. A method according to the features of any of the preceding claims, wherein
in step e) common patterns are used to identify semantic building blocks, that are small pieces of the information model, and which can be re-used in any information models as an information model template.

8. A computer program product, **characterized in that** it is suitable and adapted to carry out the steps according to one of the preceding method claims.

9. An apparatus (13) for introducing new data of an existing facility (10) containing data-producing elements, in particular actuators, sensors or automation program data, collecting data on the status of the actuators or the facility, into a control system (11) wherein the control system (11) comprises at least one building block,
Suitable to process the following steps:
a) receiving data from the data-producing elements (2)
b) normalizing and semantificating the received data,
c) building a pre-structured information-model of the facility by using the normalized data, (4)
d) creating a target information model by using a target information model template (14),
e) aligning the pre-structured information model with the target model (13), and
f) introducing the target model in the control system (11).
